# EUROPEAN PATENT SPECIFICATION

(11) **EP 4 256 536 B1**
(45) Date of publication and mention of the grant of the patent: **24.06.2026**
(21) Application number: 21783626.1
(22) Date of filing: 26.08.2021
(51) Int. Cl.: G07C 5/00

(54) **AUTONOMOUS VEHICLE HIGH-PRIORITY DATA OFFLOAD SYSTEM**
AUTONOMES FAHRZEUG MIT HOCHPRIORITÄTSDATENOFFLOADSYSTEM
SYSTÈME DE DÉLESTAGE DE DONNÉES À HAUTE PRIORITÉ DE VÉHICULE AUTONOME

(30) Priority: 01.12.2020 US 202017108046
(43) Date of publication of application: 11.10.2023
(73) Proprietor: GM Cruise Holdings LLC, San Francisco, CA 94103 (US)
(72) Inventor: GAN, Andrew, San Francisco, California 94103 (US)
(74) Representative: Manitz Finsterwald Patent- und Rechtsanwaltspartnerschaft mbB
(86) International application number: PCT/US2021/047749
(87) International publication number: WO 2022/119611

(56) References cited:
- US-A1- 2020 294 401
- US-B1- 10 351 133

## Description

### BACKGROUND

### 1. Technical Field

The subject technology relates to solutions for performing data recovery and in particular, for identifying and automatically offloading collected environmental data in response to the occurrence of some predetermined condition, such as a traffic accident.

### 2. Introduction

Autonomous vehicles (AVs) are vehicles having computers and control systems that perform driving and navigation tasks that are conventionally performed by a human driver. As AV technologies continue to advance, ride-sharing services will increasingly utilize AVs to improve service efficiency and safety. However, AVs will be required to perform many of the functions that are conventionally performed by human drivers, such as avoiding dangerous or difficult routes, and performing other navigation and routing tasks necessary to provide a safe and efficient transportation. Such tasks may require the collection and processing of large quantities of data using various sensor types, including but not limited to cameras, radars, and/or Light Detection and Ranging (LiDAR) sensors disposed on the AV.
US 10351133 B1 discloses a system for detecting a vehicular crash which may receive data from said at least one sensor, determine that a potential vehicular crash is imminent based upon the received data, and/or transmit one or more high priority packets including a notification that the potential vehicular crash is imminent.
US 2020/294401 A1 discloses a method and an apparatus for collecting and using sensor data from a vehicle.
The present invention provides a computer-implemented method, a system and a non-transitory computer-readable storage medium according to the independent claims. Embodiments are given in the subclaims, the description and the drawings.

### BRIEF DESCRIPTION OF THE DRAWINGS

Certain features of the subject technology are set forth in the appended claims. However, the accompanying drawings, which are included to provide further understanding, illustrate disclosed aspects and together with the description serve to explain the principles of the subject technology. In the drawings:
FIG. 1 illustrates a block diagram of an example environment in which a data recovery process of the disclosed technology may be implemented.
FIG. 2A illustrates a block diagram of an example process for evaluating criticality scores that can be used to trigger a data offloading process, according to some aspects of the disclosed technology.
FIG. 2B illustrates a block diagram of an example system for managing event triggers, according to some aspects of the disclosed technology.
FIG. 3 illustrates a block diagram of a process of uploading payload data and metadata, according to some aspects of the disclosed technology.
FIG. 4 illustrates steps of an example process for identifying events that can trigger a data offloading process, according to some aspects of the disclosed technology.
FIG. 5 illustrates an example system environment that can be used to facilitate AV dispatch and operations, according to some aspects of the disclosed technology.
FIG. 6 illustrates an example processor-based system with which some aspects of the subject technology can be implemented.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a more thorough understanding of the subject technology. However, it will be clear and apparent that the subject technology is not limited to the specific details set forth herein and may be practiced without these details. In some instances, structures and components are shown in block diagram form in order to avoid obscuring the concepts of the subject technology.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

In conventional autonomous vehicle (AV) deployments, individual vehicles (AVs) utilize an array of sensors to collect environmental data necessary to make maneuvering and navigation decisions. Collected environmental data can be stored to perform later analyses to benefit various AV operations. In some instances, such as when emergency events (e.g., traffic collisions) are recorded, the collected data can be used to assess AV operations, and facilitate rapid decision making to improve safety on a fleet-wide basis.

In conventional AV deployments, environmental data is stored locally (e.g., to an in-vehicle storage device), and the stored data is only offloaded from the vehicle when the storage device is physically collected from the vehicle, such as when the vehicle returns to a servicing depot or garage. The need to physically access the storage device can result in delays in the data collection process, which can be exacerbated in situations where physical access to the AV is frustrated due to other circumstances, such as the impounding or towing of a vehicle before manual data retrieval can be performed.

Aspects of the disclosed technology address the foregoing limitations of conventional environmental data collection by providing solutions for automatically uploading environmental data and/or metadata, for example, via a wireless network interface. In some aspects, the uploading of environmental data can be performed in response to the detected occurrence of a predetermined condition or event trigger. For example, the initiation of a data offloading process can be based on the occurrence of a specific event, or series of events, and/or can also be based on (or prioritized by) a determined criticality level of an associated event. By way of example, a detected traffic collision event may trigger the initiation of a data offloading process, whereby data offloading is further based on a determined criticality of the event, i.e., a severity of the traffic collision.

As discussed in further detail below, various models, e.g., machine-learning (ML) models and/or heuristic-based detectors, can be used to determine or identify the occurrence of specific conditional events or triggers. Similarly, ML models and/or various detectors can be deployed to facilitate determinations of event/trigger criticality levels. Environmental data for events that are deemed to be highly critical, or of a serious nature, can be prioritized for automatic offloading from the vehicle so that the data can be quickly analyzed and used to inform rapid response options, such as, deploying updates to various other fleet vehicles. By improving the cadence of data offloading for critical events, aspects of the disclosed technology provide solutions that can improve safety and vehicle management on a fleet-wide basis.

As discussed herein, multiple examples are made with respect to events (predetermined events, triggering events, or triggers) that relate to traffic collisions. However, it is understood that the disclosed data offloading methods are not limited to conditional events (triggers) of a specific type (e.g., traffic accidents/collisions). Rather, the data offloading methods disclosed herein can be generalized to virtually any type of predefined conditions or triggers. By way of example, event triggers may include, but are not limited to: detected security breaches, map changes, and/or drive performance issues, etc. In some aspects, event triggers may be based on performance characteristics of one or more hardware and or software modules of the AV. For example, triggers may be based on predetermined performance benchmarks used to validate software/firmware or hardware updates, for example, to ensure that the updates are performing as expected.

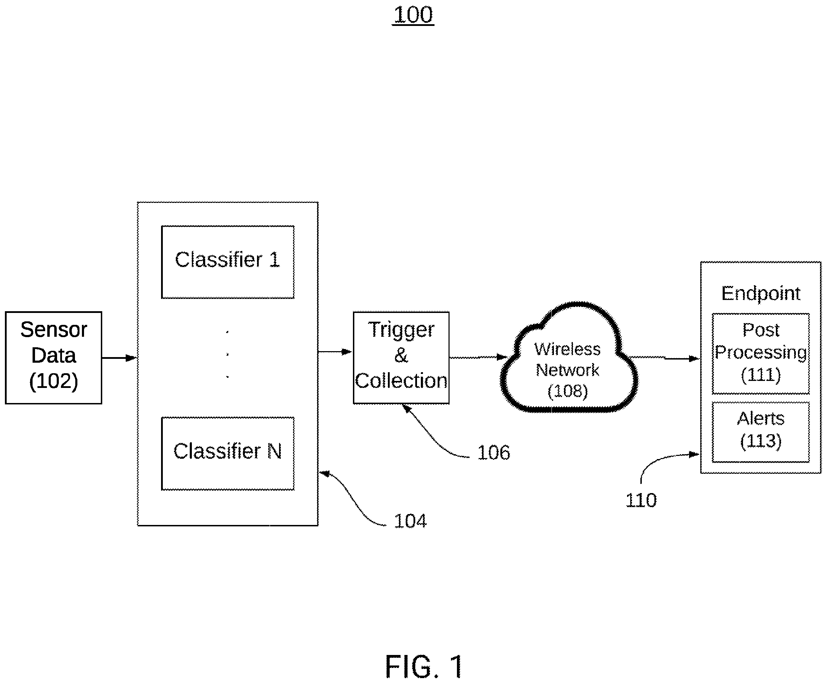

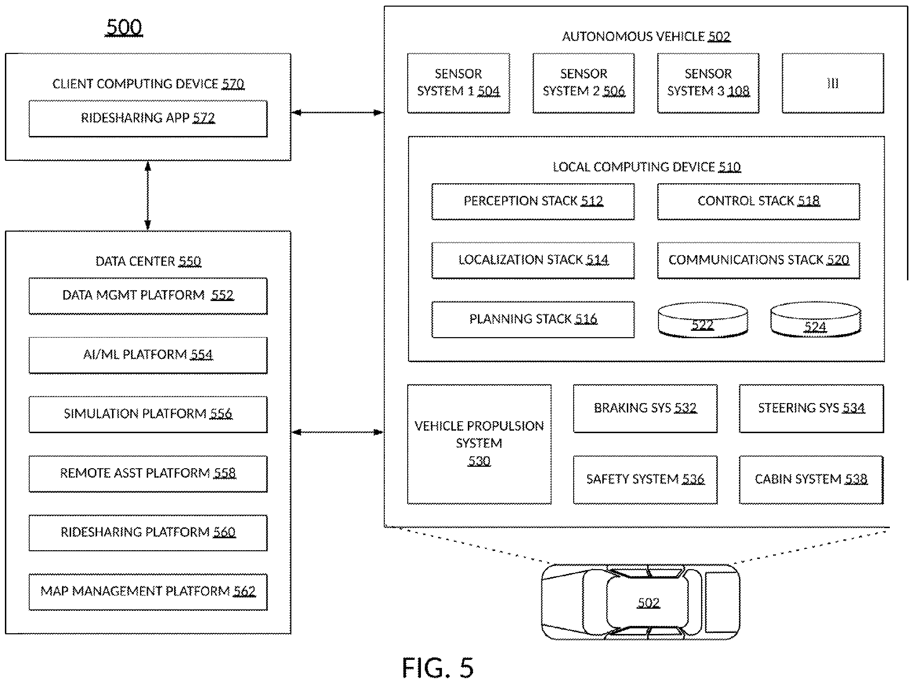

FIG. 1 illustrates a block diagram of an example environment 100 in which an AV data recovery process can be implemented. As illustrated in environment 100, sensor data (environmental data) is collected by one or more sensors of the AV (block 102). As discussed in further detail with respect to FIG. 5 (below), sensor data can include data feeds from one or more sensor types, including but not limited to: Light Detection and Ranging (LiDAR) sensors, cameras, accelerometers (e.g., force sensors), and/or sonar, etc. Collected sensor data can then be analyzed to identify triggering events (such as emergency events) and to determine if event criticality levels for the triggering event warrant the initiation of a data offload process. In some aspects, machine-learning (ML) classifiers can be used to classify (identify) event types and/or criticality levels (block 104). However, in other aspects, heuristic-based detectors may be used. In some aspects, heuristic-based detectors may be used in conjunction with one or more ML classifiers e.g., Classifiers 1-N 104.

By way of example, a detector may be used to diagnose or identify an event type, such as the occurrence and nature of an emergency event, such as a traffic collision involving a pedestrian, or that resulted in damage to the AV. In turn, one or more ML classifiers may be used to determine a criticality level associated with the emergency event. In some aspects, depending on the criticality level, environmental data may be collected/collated and automatically uploaded (106), e.g., via a wireless network interface (not shown) over a wireless network 108, to a remote endpoint (110).

Once the uploaded data is received at endpoint 110, post processing can be performed to determine an appropriate response to the emergency event, and to analyze events leading up to the event occurrence (block 111). To the extent that the emergency event resulted from an AV malfunction, such as those causing map performance issues, updates may be pushed to one or more other fleet vehicles, for example, to prevent the occurrence of similar emergency events. By way of example, updates may include updates to AV programs, maps, security functions, and/or routines, e.g., to update maneuver and/or navigation functions. In some aspects, endpoint 110 can be configured to generate alerts (113), for example, to provide notifications to other operators and/or fleet vehicles regarding the location of the accident, enabling them to avoid the accident site and to find other navigation paths. By way of example, notifications may be provided to various parties involved in the management and administration of vehicle fleet operations, including but not limited to: operations personnel, legal personnel, and/or engineering personnel, etc.

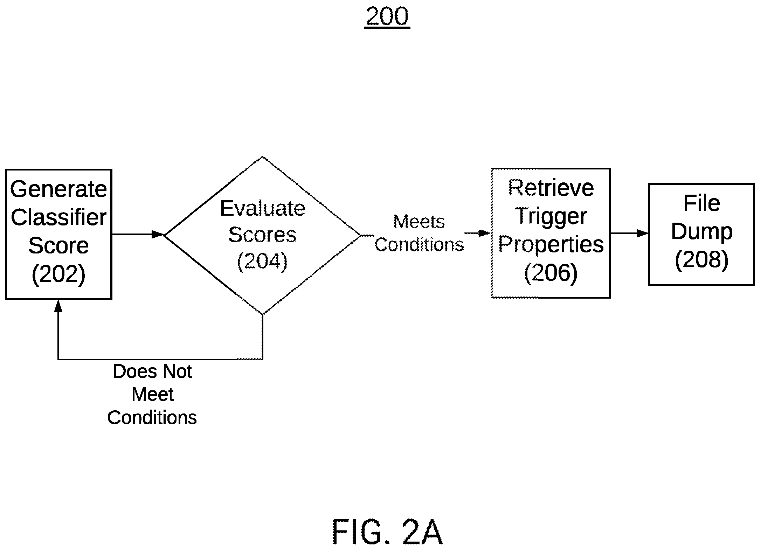

FIG. 2A illustrates a block diagram of an example process 200 for evaluating criticality scores for one or more AV collision events. Process 200 begins with step 202 in which classifier scores are generated for one or more identified events. The classifier scores can represent coding that indicates a type of emergency event and/or a criticality/severity level for the event. By way of example, emergency event types can include, but are not limited to: collisions between active traffic participants (e.g., vehicle-to-vehicle), collisions with non-vehicle objects, and/or collisions with pedestrians, etc. In turn, criticality scores may be used to quantify the severity of the emergency event. By way of example, event severity may be based on various factors, including but not limited to: a force of collision, a speed at time of collision, a determination of a severity of bodily harm, a determination of a severity of property damage, etc.

Once classifier scores have been generated, it is determined if the score/s exceed a pre-determined severity threshold (204). By way of example, the classifier score for an emergency event can be provided on a ten-point scale, wherein a severity score of 1 represents low-criticality event (e.g., a low speed collision with little or no damage), and a severity score of 10 represents a potentially severe emergency (e.g., a high-speed collision). In such instances, a severity threshold (e.g., a threshold of 3) may be used to determine when automatic data offloading is performed. In some approaches, scoring may also be used to determine what data gets offloaded. Further to the above example, if the classifier score is lower than 3 (e.g., a severity score of 2), process 200 can revert back to block 202. Alternatively, if the classifier score is greater than 3, i.e., the severity score meets a predetermined condition/threshold, then process 200 proceeds to block 206 and trigger properties are retrieved (206).

In some aspects, trigger properties can be used to determine how to escalate the data offloading process. For example, emergency events associated with higher severity scores may be prioritized for review, as compared to emergency events associated with lower severity scores. Additionally, trigger properties may be used to determine where the environmental data and/or notifications associated with the emergency event are to be transmitted. That is, trigger properties may include a parameter for trigger type or source. The offloads can be routed based on the type/source parameter, e.g., to ensure that the uploaded data is routed to the optimal/correct workflow path.

For example, in a traffic collision scenario, a more severe scoring can indicate a higher probability of an actual collision versus a false positive. In that case, the more severe (e.g. higher) scoring can trigger a data offloading process that is routed to a predetermined workflow where specific personnel can take immediate action. Alternatively, a less severe scoring may trigger an offload that is routed to a different predetermined workflow, such as a diagnosis workflow for further analysis. As such, trigger event criticality/severity can be used to not only determine when data offloading should occur, but also how the uploaded streams and associated notifications are routed in various workflows.

Once handling of the environmental data and/or metadata is determined using the trigger properties (206), the file upload (file dump 208) is performed. File uploading can be performed using a wireless network interface on the vehicle, for example, that is configured to transact data over a wireless network such as a cellular or WiFi network. It is understood that various different wireless networks may be used to receive data from (or provide data to) the AV, without departing from the disclosed technology.

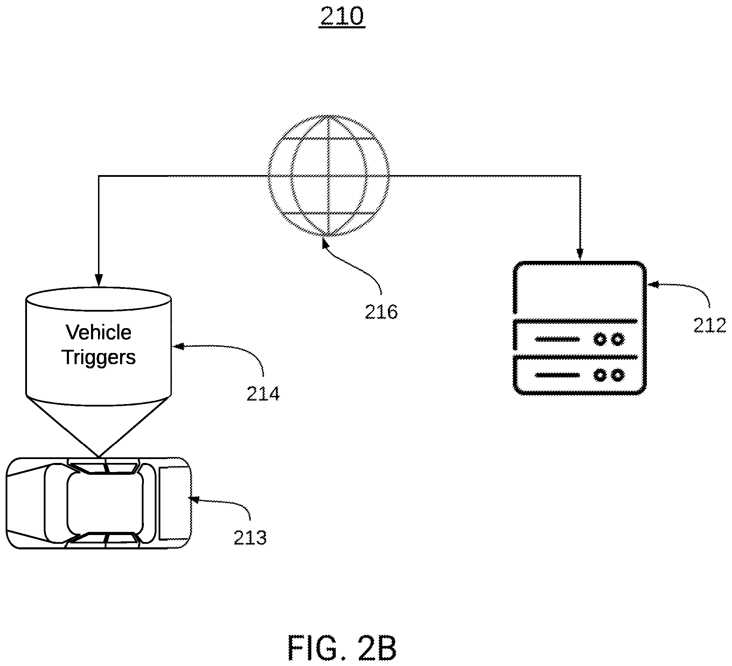

FIG. 2B illustrates a block diagram of an example system 210 for managing AV updates, including event triggers. System 210 includes a remote management system 212 that is configured to store and transact software updates with one or more AV computing systems, such as that residing on AV 213. As illustrated, management system 212 can communicate with AV 213 via a network 216, which can include one or more wired and/or wireless networks, such as the Internet.

In operation, management system can be used to modify and/or update various software modules and parameters running on AV 213. Management system 212 can be configured to facilitate updates/modifications to various vehicle triggers 214, for example, that can be used to initiate a data offloading operation of the disclosed technology. As discussed above, vehicle triggers 214 can include pre-determined conditional events that, once observed or encountered, cause data offloading to occur. Additionally, vehicle triggers 214 can include trigger parameters, for example, that can be used to specify virtually any characteristic of a data offloading process. By way of example, trigger parameters may include indications of severity thresholds, data offloading prioritizations, and/or associated workflows to which uploaded data should be provided.

Depending on the desired implementation, changes to vehicle triggers 214 can be made in different ways. For example, vehicle triggers can be pre-fetched from maintenance system 212 before a vehicle is deployed. Alternatively, vehicle triggers 214 may be updated over-the-air, for example, in response to an identified pre-condition, such as the occurrence of a disaster or significant map updates. Updates or changes to vehicle triggers can also be made on a vehicle-by-vehicle basis, or based on other vehicle grouping characteristics. For example, an administrator/operator of management system 212 can update triggers on a single vehicle, or group of vehicles on the basis of different characteristics, such as vehicle location, or vehicle purpose. By way of example, vehicles performing ride-sharing functions in a given market (e.g., Ames, Iowa) may be updated with different triggers than those performing autonomous delivery functions in a different location (e.g., Bakersfield, California). In another example, updates to triggers may be made based on other characteristics, such as based on hardware, software, and/or firmware versions for one or more vehicle modules.

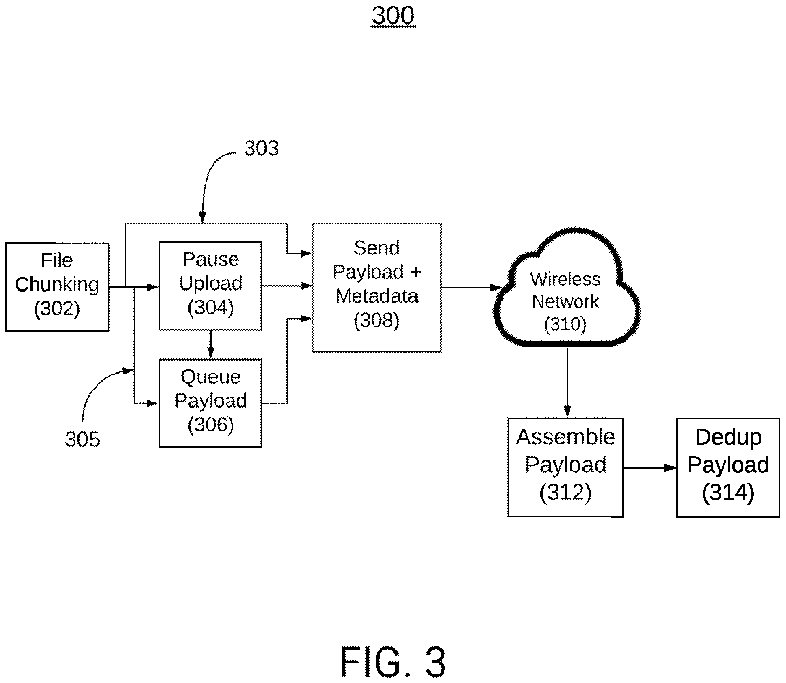

FIG. 3 illustrates a block diagram of a process 300 of uploading payload data and metadata, according to some aspects of the disclosed technology. Process 300 begins with block 302 in which file chunking is performed on the payload data, e.g., the environmental data and/or metadata associated with the emergency event. File chunking is performed to facilitate the data uploads (file dumps) for large files. The process of file chunking involves the division of the payload data into smaller data "chunks" that can be more easily uploaded. For example, a 100MB file may be divided into twenty 5MB file chunks. In some approaches, chunked files may be serialized so that file order can be maintained after the data transmission is complete. In aspects where no network interruptions are experienced, process 300 can proceed directly to block 08 in which the payload data and metadata is uploaded (e.g., to a receiving endpoint) over wireless network 310.

Alternatively, if network connectivity for the AV is interrupted, then the upload may be paused (block 304), and the payload data can be queued, for example, into a temporary memory (block 306), or a non-volatile disk cache, so that the queue is preserved in the event that the AV software stack is interrupted or restarted. In some aspects, the chunked payload data (block 302) may be directly queued (block 306), for example, if other events performed by the AV interrupt the processing ability of the AV to upload the data. Once the uploaded data has been received by the endpoint, the chunked data is assembled (block 312), and processed to remove any duplicate data e.g., deduped to removed potentially duplicate chunks or other data redundancies (block 314).

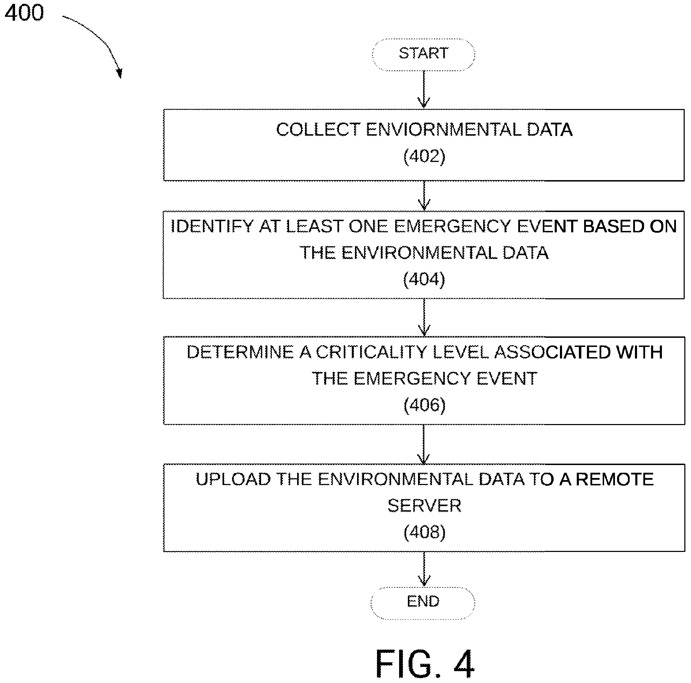

FIG. 4 illustrates steps of an example process 400 for identifying emergency events, and automatically uploading associated environmental data (payload data and metadata). Process 400 begins with step 402 in which environmental data is collected, for example, using one or more AV sensors. As discussed above, the AV sensors may include sensors of various types, including but not limited to cameras and/or Light Detection and Ranging (LiDAR) sensors disposed on the AV.

In step 404, the environmental data (and any accompanying metadata) are processed to identify traffic events that may be of safety concern, e.g., emergency events. In some aspects, emergency event identification may be performed using rule-based logic systems, such as heuristic based detectors. By way of example, potential emergency events may be flagged/identified based on a takeover of AV controls that is performed by a human safety driver or technician. In other implementations, emergency events may be identified using one or more machine-learning models, for example, that are configured to review and analyze environmental data to identify/classify potentially dangerous traffic interactions or driving behavior as emergency events.

In step 406, a criticality level associated with the emergency event is determined. Similar to emergency event identification, determinations of event criticality levels may be performed using rule-based detection systems and/or machine-learning classifiers. Further to the above example, human interventions to AV driving may be analyzed to determine if the takeover was due to a safety concern (i.e., an at-fault takeover), or if the takeover was performed for a benign reason, such as that the safety driver decided to park the car to take a driving break. In some approaches, criticality scoring may be performed, e.g., to quantify a degree of severity associated with the emergency event.

In some aspects, emergency events having a low criticality level may not result in an immediate data upload. Alternatively, emergency events having higher criticality levels may be immediately processed and uploaded to an endpoint so that a safety audit can be expeditiously performed. As discussed above, criticality levels may also be used to determine where the uploaded data should be routed, and what alerts (if any) should be generated. By providing a way to prioritize and immediately uploaded environmental data (and metadata) associated with critical emergency events, the disclosed technology provides improvements to the data collection cadence for events that may be most relevant to improving fleet-wide safety.

Turning now to FIG. 5 illustrates an example of an AV management system 500. One of ordinary skill in the art will understand that, for the AV management system 500 and any system discussed in the present disclosure, there can be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

In this example, the AV management system 500 includes an AV 502, a data center 550, and a client computing device 570. The AV 502, the data center 550, and the client computing device 570 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

AV 502 can navigate about roadways without a human driver based on sensor signals generated by multiple sensor systems 504, 506, and 508. The sensor systems 504-508 can include different types of sensors and can be arranged about the AV 502. For instance, the sensor systems 504-508 can comprise Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 504 can be a camera system, the sensor system 506 can be a LIDAR system, and the sensor system 508 can be a RADAR system. Other embodiments may include any other number and type of sensors.

AV 502 can also include several mechanical systems that can be used to maneuver or operate AV 502. For instance, the mechanical systems can include vehicle propulsion system 530, braking system 532, steering system 534, safety system 536, and cabin system 538, among other systems. Vehicle propulsion system 530 can include an electric motor, an internal combustion engine, or both. The braking system 532 can include an engine brake, brake pads, actuators, and/or any other suitable componentry configured to assist in decelerating AV 502. The steering system 534 can include suitable componentry configured to control the direction of movement of the AV 502 during navigation. Safety system 536 can include lights and signal indicators, a parking brake, airbags, and so forth. The cabin system 538 can include cabin temperature control systems, in-cabin entertainment systems, and so forth. In some embodiments, the AV 502 may not include human driver actuators (e.g., steering wheel, handbrake, foot brake pedal, foot accelerator pedal, turn signal lever, window wipers, etc.) for controlling the AV 502. Instead, the cabin system 538 can include one or more client interfaces (e.g., Graphical User Interfaces (GUIs), Voice User Interfaces (VUIs), etc.) for controlling certain aspects of the mechanical systems 530-538.

AV 502 can additionally include a local computing device 510 that is in communication with the sensor systems 504-508, the mechanical systems 530-538, the data center 550, and the client computing device 570, among other systems. The local computing device 510 can include one or more processors and memory, including instructions that can be executed by the one or more processors. The instructions can make up one or more software stacks or components responsible for controlling the AV 502; communicating with the data center 550, the client computing device 570, and other systems; receiving inputs from riders, passengers, and other entities within the AV's environment; logging metrics collected by the sensor systems 504-508; and so forth. In this example, the local computing device 510 includes a perception stack 512, a mapping and localization stack 514, a planning stack 516, a control stack 518, a communications stack 520, an HD geospatial database 522, and an AV operational database 524, among other stacks and systems.

Perception stack 512 can enable the AV 502 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 504-508, the mapping and localization stack 514, the HD geospatial database 522, other components of the AV, and other data sources (e.g., the data center 550, the client computing device 570, third-party data sources, etc.). The perception stack 512 can detect and classify objects and determine their current and predicted locations, speeds, directions, and the like. In addition, the perception stack 512 can determine the free space around the AV 502 (e.g., to maintain a safe distance from other objects, change lanes, park the AV, etc.). The perception stack 512 can also identify environmental uncertainties, such as where to look for moving objects, flag areas that may be obscured or blocked from view, and so forth.

Mapping and localization stack 514 can determine the AV's position and orientation (pose) using different methods from multiple systems (e.g., GPS, IMUs, cameras, LIDAR, RADAR, ultrasonic sensors, the HD geospatial database 522, etc.). For example, in some embodiments, the AV 502 can compare sensor data captured in real-time by the sensor systems 504-508 to data in the HD geospatial database 522 to determine its precise (e.g., accurate to the order of a few centimeters or less) position and orientation. The AV 502 can focus its search based on sensor data from one or more first sensor systems (e.g., GPS) by matching sensor data from one or more second sensor systems (e.g., LIDAR). If the mapping and localization information from one system is unavailable, the AV 502 can use mapping and localization information from a redundant system and/or from remote data sources.

The planning stack 516 can determine how to maneuver or operate the AV 502 safely and efficiently in its environment. For example, the planning stack 516 can receive the location, speed, and direction of the AV 502, geospatial data, data regarding objects sharing the road with the AV 502 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 502 from one point to another. The planning stack 516 can determine multiple sets of one or more mechanical operations that the AV 502 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 516 can select from multiple backup plans to carry out. For example, while preparing to change lanes to turn right at an intersection, another vehicle may aggressively cut into the destination lane, making the lane change unsafe. The planning stack 516 could have already determined an alternative plan for such an event, and upon its occurrence, help to direct the AV 502 to go around the block instead of blocking a current lane while waiting for an opening to change lanes.

The control stack 518 can manage the operation of the vehicle propulsion system 530, the braking system 532, the steering system 534, the safety system 536, and the cabin system 538. The control stack 518 can receive sensor signals from the sensor systems 504-508 as well as communicate with other stacks or components of the local computing device 510 or a remote system (e.g., the data center 550) to effectuate operation of the AV 502. For example, the control stack 518 can implement the final path or actions from the multiple paths or actions provided by the planning stack 516. This can involve turning the routes and decisions from the planning stack 516 into commands for the actuators that control the AV's steering, throttle, brake, and drive unit.

The communication stack 520 can transmit and receive signals between the various stacks and other components of the AV 502 and between the AV 502, the data center 550, the client computing device 570, and other remote systems. The communication stack 520 can enable the local computing device 510 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 520 can also facilitate local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 522 can store HD maps and related data of the streets upon which the AV 502 travels. In some embodiments, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal U-turn lanes; permissive or protected only right turn lanes; etc.). The traffic controls lane can include geospatial information of traffic signal lights, traffic signs, and other road objects and related attributes.

The AV operational database 524 can store raw AV data generated by the sensor systems 504-508 and other components of the AV 502 and/or data received by the AV 502 from remote systems (e.g., the data center 550, the client computing device 570, etc.). In some embodiments, the raw AV data can include HD LIDAR point cloud data, image data, RADAR data, GPS data, and other sensor data that the data center 550 can use for creating or updating AV geospatial data as discussed further below with respect to FIG. 2 and elsewhere in the present disclosure.

The data center 550 can be a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and so forth. The data center 550 can include one or more computing devices remote to the local computing device 510 for managing a fleet of AVs and AV-related services. For example, in addition to managing the AV 502, the data center 550 may also support a ridesharing service, a delivery service, a remote/roadside assistance service, street services (e.g., street mapping, street patrol, street cleaning, street metering, parking reservation, etc.), and the like.

The data center 550 can send and receive various signals to and from the AV 502 and client computing device 570. These signals can include sensor data captured by the sensor systems 504-508, roadside assistance requests, software updates, ridesharing pick-up and drop-off instructions, and so forth. In this example, the data center 550 includes a data management platform 552, an Artificial Intelligence/Machine Learning (AI/ML) platform 554, a simulation platform 556, a remote assistance platform 558, a ridesharing platform 560, and map management system platform 562, among other systems.

Data management platform 552 can be a "big data" system capable of receiving and transmitting data at high velocities (e.g., near real-time or real-time), processing a large variety of data, and storing large volumes of data (e.g., terabytes, petabytes, or more of data). The varieties of data can include data having different structure (e.g., structured, semi-structured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 550 can access data stored by the data management platform 552 to provide their respective services.

The AI/ML platform 554 can provide the infrastructure for training and evaluating machine learning algorithms for operating the AV 502, the simulation platform 556, the remote assistance platform 558, the ridesharing platform 560, the map management system platform 562, and other platforms and systems. Using the AI/ML platform 554, data scientists can prepare data sets from the data management platform 552; select, design, and train machine learning models; evaluate, refine, and deploy the models; maintain, monitor, and retrain the models; and so on.

The simulation platform 556 can enable testing and validation of the algorithms, machine learning models, neural networks, and other development efforts for the AV 502, the remote assistance platform 558, the ridesharing platform 560, the map management system platform 562, and other platforms and systems. The simulation platform 556 can replicate a variety of driving environments and/or reproduce real-world scenarios from data captured by the AV 502, including rendering geospatial information and road infrastructure (e.g., streets, lanes, crosswalks, traffic lights, stop signs, etc.) obtained from the map management system platform 562; modeling the behavior of other vehicles, bicycles, pedestrians, and other dynamic elements; simulating inclement weather conditions, different traffic scenarios; and so on.

The remote assistance platform 558 can generate and transmit instructions regarding the operation of the AV 502. For example, in response to an output of the AI/ML platform 554 or other system of the data center 550, the remote assistance platform 558 can prepare instructions for one or more stacks or other components of the AV 502.

The ridesharing platform 560 can interact with a customer of a ridesharing service via a ridesharing application 572 executing on the client computing device 570. The client computing device 570 can be any type of computing system, including a server, desktop computer, laptop, tablet, smartphone, smart wearable device (e.g., smart watch, smart eyeglasses or other Head-Mounted Display (HMD), smart ear pods or other smart in-ear, on-ear, or over-ear device, etc.), gaming system, or other general purpose computing device for accessing the ridesharing application 572. The client computing device 570 can be a customer's mobile computing device or a computing device integrated with the AV 502 (e.g., the local computing device 510). The ridesharing platform 560 can receive requests to be picked up or dropped off from the ridesharing application 572 and dispatch the AV 502 for the trip.

Map management system platform 562 can provide a set of tools for the manipulation and management of geographic and spatial (geospatial) and related attribute data. The data management platform 552 can receive LIDAR point cloud data, image data (e.g., still image, video, etc.), RADAR data, GPS data, and other sensor data (e.g., raw data) from one or more AVs 502, UAVs, satellites, third-party mapping services, and other sources of geospatially referenced data. The raw data can be processed, and map management system platform 562 can render base representations (e.g., tiles (2D), bounding volumes (3D), etc.) of the AV geospatial data to enable users to view, query, label, edit, and otherwise interact with the data. Map management system platform 562 can manage workflows and tasks for operating on the AV geospatial data. Map management system platform 562 can control access to the AV geospatial data, including granting or limiting access to the AV geospatial data based on user-based, role-based, group-based, task-based, and other attribute-based access control mechanisms. Map management system platform 562 can provide version control for the AV geospatial data, such as to track specific changes that (human or machine) map editors have made to the data and to revert changes when necessary. Map management system platform 562 can administer release management of the AV geospatial data, including distributing suitable iterations of the data to different users, computing devices, AVs, and other consumers of HD maps. Map management system platform 562 can provide analytics regarding the AV geospatial data and related data, such as to generate insights relating to the throughput and quality of mapping tasks.

In some embodiments, the map viewing services of map management system platform 562 can be modularized and deployed as part of one or more of the platforms and systems of the data center 550. For example, the AI/ML platform 554 may incorporate the map viewing services for visualizing the effectiveness of various object detection or object classification models, the simulation platform 556 may incorporate the map viewing services for recreating and visualizing certain driving scenarios, the remote assistance platform 558 may incorporate the map viewing services for replaying traffic incidents to facilitate and coordinate aid, the ridesharing platform 560 may incorporate the map viewing services into the client application 572 to enable passengers to view the AV 502 in transit en route to a pick-up or drop-off location, and so on.

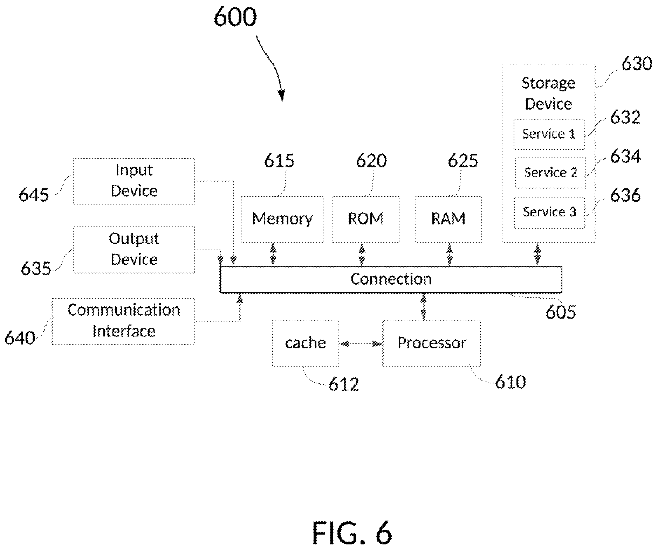

FIG. 6 illustrates an example processor-based system with which some aspects of the subject technology can be implemented. For example, processor-based system 600 can be any computing device making up internal computing system 610, remote computing system 650, a passenger device executing the rideshare app 670, internal computing device 630, or any component thereof in which the components of the system are in communication with each other using connection 605. Connection 605 can be a physical connection via a bus, or a direct connection into processor 610, such as in a chipset architecture. Connection 605 can also be a virtual connection, networked connection, or logical connection.

In some embodiments, computing system 600 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 600 includes at least one processing unit (CPU or processor) 610 and connection 605 that couples various system components including system memory 615, such as read-only memory (ROM) 620 and random-access memory (RAM) 625 to processor 610. Computing system 600 can include a cache of high-speed memory 612 connected directly with, in close proximity to, or integrated as part of processor 610.

Processor 610 can include any general-purpose processor and a hardware service or software service, such as services 632, 634, and 636 stored in storage device 630, configured to control processor 610 as well as a special-purpose processor where software instructions are incorporated into the actual processor design. Processor 610 may essentially be a completely self-contained computing system, containing multiple cores or processors, a bus, memory controller, cache, etc. A multi-core processor may be symmetric or asymmetric.

To enable user interaction, computing system 600 includes an input device 645, which can represent any number of input mechanisms, such as a microphone for speech, a touch-sensitive screen for gesture or graphical input, keyboard, mouse, motion input, speech, etc. Computing system 600 can also include output device 635, which can be one or more of a number of output mechanisms known to those of skill in the art. In some instances, multimodal systems can enable a user to provide multiple types of input/output to communicate with computing system 600. Computing system 600 can include communications interface 640, which can generally govern and manage the user input and system output. The communication interface may perform or facilitate receipt and/or transmission wired or wireless communications via wired and/or wireless transceivers, including those making use of an audio jack/plug, a microphone jack/plug, a universal serial bus (USB) port/plug, an Apple^{®} Lightning^{®} port/plug, an Ethernet port/plug, a fiber optic port/plug, a proprietary wired port/plug, a BLUETOOTH^{®} wireless signal transfer, a BLUETOOTH^{®} low energy (BLE) wireless signal transfer, an IBEACON^{®} wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof.

Communication interface 640 may also include one or more Global Navigation Satellite System (GNSS) receivers or transceivers that are used to determine a location of the computing system 600 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 630 can be a non-volatile and/or non-transitory and/or computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick^{®} card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof.

Storage device 630 can include software services, servers, services, etc., that when the code that defines such software is executed by the processor 610, it causes the system to perform a function. In some embodiments, a hardware service that performs a particular function can include the software component stored in a computer-readable medium in connection with the necessary hardware components, such as processor 610, connection 605, output device 635, etc., to carry out the function.

As understood by those of skill in the art, machine-learning based classification techniques can vary depending on the desired implementation. For example, machine-learning classification schemes can utilize one or more of the following, alone or in combination: hidden Markov models; recurrent neural networks; convolutional neural networks (CNNs); deep learning; Bayesian symbolic methods; general adversarial networks (GANs); support vector machines; image registration methods; applicable rule-based system. Where regression algorithms are used, they may include including but are not limited to: a Stochastic Gradient Descent Regressor, and/or a Passive Aggressive Regressor, etc.

Machine learning classification models can also be based on clustering algorithms (e.g., a Mini-batch K-means clustering algorithm), a recommendation algorithm (e.g., a Miniwise Hashing algorithm, or Euclidean Locality-Sensitive Hashing (LSH) algorithm), and/or an anomaly detection algorithm, such as a Local outlier factor. Additionally, machine-learning models can employ a dimensionality reduction approach, such as, one or more of: a Mini-batch Dictionary Learning algorithm, an Incremental Principal Component Analysis (PCA) algorithm, a Latent Dirichlet Allocation algorithm, and/or a Mini-batch K-means algorithm, etc.

Embodiments within the scope of the present disclosure may also include tangible and/or non-transitory computer-readable storage media or devices for carrying or having computer-executable instructions or data structures stored thereon. Such tangible computer-readable storage devices can be any available device that can be accessed by a general purpose or special purpose computer, including the functional design of any special purpose processor as described above. By way of example, and not limitation, such tangible computer-readable devices can include RAM, ROM, EEPROM, CD-ROM or other optical disk storage, magnetic disk storage or other magnetic storage devices, or any other device which can be used to carry or store desired program code in the form of computer-executable instructions, data structures, or processor chip design. When information or instructions are provided via a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable storage devices.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform tasks or implement abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Other embodiments of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

The various embodiments described above are provided by way of illustration only and should not be construed to limit the scope of the disclosure. For example, the principles herein apply equally to optimization as well as general improvements. Various modifications and changes may be made to the principles described herein without following the example embodiments and applications illustrated and described herein, and without departing from the disclosure. Claim language reciting "at least one of" a set indicates that one member of the set or multiple members of the set satisfy the claim.

## Claims

1. A computer-implemented method, comprising:
collecting (402) environmental data using one or more sensors of an autonomous vehicle, AV, (213), that is part of a fleet of vehicles;
processing the environmental data to identify (404) at least one emergency event;
analyzing the emergency event to determine (406) an associated criticality level;
if the criticality level exceeds a predetermined threshold, automatically uploading (408) the environmental data to a remote server; and **characterized by**
analyzing the uploaded environmental data to identify if the emergency event resulted from an AV malfunction, and in response to identifying that the emergency event resulted from an AV malfunction, pushing an update to one or more other vehicles of the fleet to prevent the occurrence of similar emergency events.

2. The computer-implemented method of claim 1, wherein processing the environmental data to identify the at least one emergency event further comprises:
identifying the at least one emergency event using a machine-learning classifier (104).

3. The computer-implemented method of claim 1, wherein processing the environmental data to identify the at least one emergency event further comprises:
identifying the at least one emergency event using a heuristic-based detector.

4. The computer-implemented method of claim 1, wherein the associated criticality level is based on a collision type corresponding with the emergency event.

5. The computer-implemented method of claim 1, wherein automatically uploading the environmental data to the remote server, further comprises:
parsing the environmental data associated with the at least one emergency event; and
automatically transmitting the environmental data associated with the at least one emergency event to the remote server via a wireless network interface (108).

6. The computer-implemented method of claim 1, further comprising:
automatically storing the environmental data to a local memory device, if the criticality level does not exceed the predetermined threshold.

7. The computer-implemented method of claim 1, wherein the one or more sensors of the AV (213) include one or more cameras, Light Detection and Ranging (LiDAR) sensors, or accelerometers.

8. A system comprising:
one or more processors; and
a non-transitory computer-readable medium comprising instructions stored therein, which when executed by the processors, cause the processors to perform operations comprising:
collecting environmental data using one or more sensors of an autonomous vehicle, AV, (213), that is part of a fleet of vehicles;
processing the environmental data to identify at least one emergency event;
analyzing the emergency event to determine an associated criticality level;
if the criticality level exceeds a predetermined threshold, automatically uploading the environmental data to a remote server; and **characterized by**
analyzing the uploaded environmental data to identify if the emergency event resulted from an AV malfunction, and in response to identifying that the emergency event resulted from an AV malfunction, pushing an update to one or more other vehicles of the fleet to prevent the occurrence of similar emergency events.

9. The system of claim 8, wherein processing the environmental data to identify the at least one emergency event further comprises:
identifying the at least one emergency event using a machine-learning classifier (104).

10. The system of claim 8, wherein processing the environmental data to identify the at least one emergency event further comprises:
identifying the at least one emergency event using a heuristic-based detector.

11. The system of claim 8, wherein the associated criticality level is based on a collision type corresponding with the emergency event.

12. The system of claim 8, wherein automatically uploading the environmental data to the remote server, further comprises:
parsing the environmental data associated with the at least one emergency event; and
automatically transmitting the environmental data associated with the at least one emergency event to the remote server via a wireless network interface (108).

13. The system of claim 8, wherein the processors are configured to further perform operations comprising:
automatically storing the environmental data to a local memory device, if the criticality level does not exceed the predetermined threshold.

14. The system of claim 8, wherein the one or more sensors of the AV include one or more cameras, Light Detection and Ranging (LiDAR) sensors, or accelerometers.

15. A non-transitory computer-readable storage medium comprising instructions stored therein, which when executed by one or more processors, cause the processors to perform operations comprising:
collecting environmental data using one or more sensors of an autonomous vehicle, AV, (213), that is part of a fleet of vehicles;
processing the environmental data to identify at least one emergency event;
analyzing the emergency event to determine an associated criticality level;
if the criticality level exceeds a predetermined threshold, automatically uploading the environmental data to a remote server; and **characterized by**
analyzing the uploaded environmental data to identify if the emergency event resulted from an AV malfunction, and in response to identifying that the emergency event resulted from an AV malfunction, pushing an update to one or more other vehicles of the fleet to prevent the occurrence of similar emergency events.

## Patentansprüche

1. Durch einen Computer realisiertes Verfahren, umfassend:
Sammeln (402) von Umgebungsdaten unter Verwendung eines oder mehrerer Sensoren eines autonomen Fahrzeugs, AV, (213), das Teil einer Fahrzeugflotte ist;
Verarbeiten der Umgebungsdaten, um zumindest ein Notfallereignis zu identifizieren (404);
Analysieren des Notfallereignisses, um einen zugehörigen Kritikalitätsgrad zu ermitteln (406);
wenn der Kritikalitätsgrad einen vorbestimmten Schwellenwert überschreitet, automatisches Hochladen (408) der Umgebungsdaten auf einen entfernten Server; und
**dadurch gekennzeichnet, dass**
die hochgeladenen Umgebungsdaten analysiert werden, um festzustellen, ob das Notfallereignis auf eine Fehlfunktion des AV zurückzuführen ist, und in Ansprechen auf die Feststellung, dass das Notfallereignis auf eine Fehlfunktion des AV zurückzuführen ist, eine Aktualisierung an ein oder mehrere andere Fahrzeuge der Flotte gesendet wird, um das Auftreten ähnlicher Notfallereignisse zu verhindern.

2. Durch einen Computer realisiertes Verfahren nach Anspruch 1, wobei das Verarbeiten der Umgebungsdaten zum Identifizieren des zumindest einen Notfallereignisses ferner umfasst:
Identifizieren des zumindest einen Notfallereignisses unter Verwendung eines Klassifikators (104) für maschinelles Lernen.

3. Durch einen Computer realisiertes Verfahren nach Anspruch 1, wobei das Verarbeiten der Umgebungsdaten zum Identifizieren des zumindest einen Notfallereignisses ferner umfasst:
Identifizieren des zumindest einen Notfallereignisses unter Verwendung eines heuristikbasierten Detektors.

4. Durch einen Computer realisiertes Verfahren nach Anspruch 1, wobei der zugehörige Kritikalitätsgrad auf einem dem Notfallereignis entsprechenden Kollisionstyp basiert.

5. Durch einen Computer realisiertes Verfahren nach Anspruch 1, wobei das automatische Hochladen der Umgebungsdaten auf den entfernten Server ferner umfasst:
Parsen der dem zumindest einen Notfallereignis zugehörigen Umgebungsdaten; und
automatisches Übertragen der dem zumindest einen Notfallereignis zugehörigen Umgebungsdaten an den entfernten Server über eine Schnittstelle (108) eines drahtlosen Netzwerks.

6. Durch einen Computer realisiertes Verfahren nach Anspruch 1, ferner umfassend:
automatisches Speichern der Umgebungsdaten an einer lokalen Speichereinrichtung, wenn der Kritikalitätsgrad den vorbestimmten Schwellenwert nicht überschreitet.

7. Durch einen Computer realisiertes Verfahren nach Anspruch 1, wobei der eine oder die mehreren Sensoren des AV (213) eine oder mehrere Kameras, Light Detection and Ranging (LiDAR)-Sensoren oder Beschleunigungsmesseinrichtungen umfassen.

8. System, umfassend:
einen oder mehrere Prozessoren; und
ein nicht-transitorisches, durch einen Computer lesbares Medium, das darin gespeicherte Anweisungen umfasst, die, wenn sie von den Prozessoren ausgeführt werden, bewirken, dass die Prozessoren Operationen durchführen, die umfassen:
Sammeln von Umgebungsdaten unter Verwendung eines oder mehrerer Sensoren eines autonomen Fahrzeugs, AV, (213), das Teil einer Fahrzeugflotte ist;
Verarbeiten der Umgebungsdaten, um zumindest ein Notfallereignis zu identifizieren;
Analysieren des Notfallereignisses, um einen zugehörigen Kritikalitätsgrad zu ermitteln;
wenn der Kritikalitätsgrad einen vorbestimmten Schwellenwert überschreitet, automatisches Hochladen der Umgebungsdaten auf einen entfernten Server; und
**dadurch gekennzeichnet, dass**
die hochgeladenen Umgebungsdaten analysiert werden, um festzustellen, ob das Notfallereignis auf eine Fehlfunktion des AV zurückzuführen ist, und in Ansprechen auf die Feststellung, dass das Notfallereignis auf eine Fehlfunktion des AV zurückzuführen ist, eine Aktualisierung an ein oder mehrere andere Fahrzeuge der Flotte gesendet wird, um das Auftreten ähnlicher Notfallereignisse zu verhindern.

9. System nach Anspruch 8, wobei das Verarbeiten der Umgebungsdaten zum Identifizieren des zumindest einen Notfallereignisses ferner umfasst: Identifizieren des zumindest einen Notfallereignisses unter Verwendung eines Klassifikators (104) für maschinelles Lernen.

10. System nach Anspruch 8, wobei das Verarbeiten der Umgebungsdaten zum Identifizieren des zumindest einen Notfallereignisses ferner umfasst: Identifizieren des zumindest einen Notfallereignisses unter Verwendung eines heuristikbasierten Detektors.

11. System nach Anspruch 8, wobei der zugehörige Kritikalitätsgrad auf einem dem Notfallereignis entsprechenden Kollisionstyp basiert.

12. System nach Anspruch 8, wobei das automatische Hochladen der Umgebungsdaten auf den entfernten Server ferner umfasst:
Parsen der dem zumindest einen Notfallereignis zugehörigen Umgebungsdaten; und
automatisches Übertragen der dem zumindest einen Notfallereignis zugehörigen Umgebungsdaten an den entfernten Server über eine Schnittstelle (108) eines drahtlosen Netzwerks.

13. System nach Anspruch 8, wobei die Prozessoren ferner ausgestaltet sind, um Operationen durchzuführen, die umfassen:
automatisches Speichern der Umgebungsdaten an einer lokalen Speichereinrichtung, wenn der Kritikalitätsgrad den vorbestimmten Schwellenwert nicht überschreitet.

14. System nach Anspruch 8, wobei der eine oder die mehreren Sensoren des AV eine oder mehrere Kameras, Light Detection and Ranging (LiDAR)-Sensoren oder Beschleunigungsmesseinrichtungen umfassen.

15. Nicht-transitorisches, durch einen Computer lesbares Speichermedium, das darin gespeicherte Anweisungen umfasst, die, wenn sie von einem oder mehreren Prozessoren ausgeführt werden, bewirken, dass die Prozessoren Operationen durchführen, die umfassen:
Sammeln von Umgebungsdaten unter Verwendung eines oder mehrerer Sensoren eines autonomen Fahrzeugs, AV, (213), das Teil einer Fahrzeugflotte ist;
Verarbeiten der Umgebungsdaten, um zumindest ein Notfallereignis zu identifizieren;
Analysieren des Notfallereignisses, um einen zugehörigen Kritikalitätsgrad zu ermitteln;
wenn der Kritikalitätsgrad einen vorbestimmten Schwellenwert überschreitet, automatisches Hochladen der Umgebungsdaten auf einen entfernten Server; und
**dadurch gekennzeichnet, dass**
die hochgeladenen Umgebungsdaten analysiert werden, um festzustellen, ob das Notfallereignis auf eine Fehlfunktion des AV zurückzuführen ist, und in Ansprechen auf die Feststellung, dass das Notfallereignis auf eine Fehlfunktion des AV zurückzuführen ist, eine Aktualisierung an ein oder mehrere andere Fahrzeuge der Flotte gesendet wird, um das Auftreten ähnlicher Notfallereignisse zu verhindern.

## Revendications

1. Procédé mis en œuvre par ordinateur, comprenant les étapes consistant à :
collecter (402) des données d'environnement à l'aide d'un ou de plusieurs capteurs d'un véhicule autonome, AV, (213), qui fait partie d'une flotte de véhicules ;
traiter les données d'environnement pour identifier (404) au moins un événement d'urgence ;
analyser l'événement d'urgence pour déterminer (406) un niveau critique associé ;
si le niveau critique dépasse un seuil prédéterminé,
télécharger de manière automatique (408) les données d'environnement vers un serveur distant ; et
**caractérisé par** l'étape consistant à
analyser les données d'environnement téléchargées pour identifier si l'événement d'urgence a résulté d'un dysfonctionnement de l'AV, et en réponse à l'identification selon laquelle l'événement d'urgence a résulté d'un dysfonctionnement de l'AV, envoyer une mise à jour vers un ou plusieurs autres véhicules de la flotte pour empêcher l'occurrence d'événements d'urgence similaires.

2. Procédé mis en œuvre par ordinateur selon la revendication 1, dans lequel l'étape consistant à traiter les données d'environnement pour identifier ledit au moins un événement d'urgence comprend en outre :
d'identifier ledit au moins un événement d'urgence à l'aide d'un classifieur d'apprentissage automatique (104).

3. Procédé mis en œuvre par ordinateur selon la revendication 1, dans lequel l'étape consistant à traiter les données d'environnement pour identifier ledit au moins un événement d'urgence comprend en outre :
d'identifier ledit au moins un événement d'urgence à l'aide d'un détecteur heuristique.

4. Procédé mis en œuvre par ordinateur selon la revendication 1, dans lequel le niveau critique associé est basé sur un type de collision correspondant à l'événement d'urgence.

5. Procédé mis en œuvre par ordinateur selon la revendication 1, dans lequel l'étape consistant à télécharger de manière automatique les données d'environnement vers le serveur distant comprend en outre :
d'effectuer une analyse syntaxique, dite parsing, des données d'environnement associées audit au moins un événement d'urgence ; et
de transmettre de manière automatique les données d'environnement associées audit au moins un événement d'urgence au serveur distant via une interface de réseau sans fil (108).

6. Procédé mis en œuvre par ordinateur selon la revendication 1, comprenant en outre l'étape consistant à :
stocker de manière automatique les données d'environnement sur un dispositif de mémoire locale, si le niveau critique ne dépasse pas le seuil prédéterminé.

7. Procédé mis en œuvre par ordinateur selon la revendication 1, dans lequel ledit au moins un capteur de l'AV (213) inclut une ou plusieurs caméras, des capteurs de détection et d'estimation de la distance par la lumière (LiDAR), ou des accéléromètres.

8. Système comprenant :
un ou plusieurs processeurs ; et
un support non transitoire lisible par ordinateur comprenant des instructions stockées sur celui-ci, qui, quand elles sont exécutées par les processeurs, amènent les processeurs à effectuer les opérations consistant à :
collecter des données d'environnement à l'aide d'un ou de plusieurs capteurs d'un véhicule autonome, AV, (213), qui fait partie d'une flotte de véhicules ;
traiter les données d'environnement pour identifier au moins un événement d'urgence ;
analyser l'événement d'urgence pour déterminer un niveau critique associé ;
si le niveau critique dépasse un seuil prédéterminé,
télécharger de manière automatique les données d'environnement vers un serveur distant ; et
**caractérisé par** l'opération consistant à
analyser les données d'environnement téléchargées pour identifier si l'événement d'urgence a résulté d'un dysfonctionnement de l'AV, et en réponse à l'identification selon laquelle l'événement d'urgence a résulté d'un dysfonctionnement de l'AV, envoyer une mise à jour vers un ou plusieurs autres véhicules de la flotte pour empêcher l'occurrence d'événements d'urgence similaires.

9. Système selon la revendication 8, dans lequel l'opération consistant à traiter les données d'environnement pour identifier ledit au moins un événement d'urgence comprend en outre :
d'identifier ledit au moins un événement d'urgence à l'aide d'un classifieur d'apprentissage automatique (104).

10. Système selon la revendication 8, dans lequel l'opération consistant à traiter les données d'environnement pour identifier ledit au moins un événement d'urgence comprend en outre :
d'identifier ledit au moins un événement d'urgence à l'aide d'un détecteur heuristique.

11. Système selon la revendication 8, dans lequel le niveau critique associé est basé sur un type de collision correspondant à l'événement d'urgence.

12. Système selon la revendication 8, dans lequel l'opération consistant à télécharger de manière automatique les données d'environnement vers le serveur distant comprend en outre :
d'effectuer une analyse syntaxique, dite parsing, des données d'environnement associées audit au moins un événement d'urgence ; et
de transmettre de manière automatique les données d'environnement associées audit au moins un événement d'urgence au serveur distant via une interface de réseau sans fil (108).

13. Système selon la revendication 8, dans lequel les processeurs sont configurés pour effectuer en outre l'opération consistant à :
stocker de manière automatique les données d'environnement sur un dispositif de mémoire locale, si le niveau critique ne dépasse pas le seuil prédéterminé.

14. Système selon la revendication 8, dans lequel lesdits un ou plusieurs capteurs de l'AV incluent une ou plusieurs caméras, des capteurs de détection et d'estimation de la distance par la lumière (LiDAR), ou des accéléromètres.

15. Support de stockage non transitoire lisible par ordinateur comprenant des instructions stockées sur celui-ci, qui, quand elles sont exécutées par lesdits un ou plusieurs processeurs, amènent les processeurs à effectuer les opérations consistant à :
collecter des données d'environnement à l'aide d'un ou de plusieurs capteurs d'un véhicule autonome, AV, (213), qui fait partie d'une flotte de véhicules ;
traiter les données d'environnement pour identifier au moins un événement d'urgence ;
analyser l'événement d'urgence pour déterminer un niveau critique associé ;
si le niveau critique dépasse un seuil prédéterminé,
télécharger de manière automatique les données d'environnement vers un serveur distant ; et
**caractérisé par** l'opération consistant à
analyser les données d'environnement téléchargées pour identifier si l'événement d'urgence a résulté d'un dysfonctionnement de l'AV, et en réponse à l'identification selon laquelle l'événement d'urgence a résulté d'un dysfonctionnement de l'AV, envoyer une mise à jour vers un ou plusieurs autres véhicules de la flotte pour empêcher l'occurrence d'événements d'urgence similaires.
